# EUROPEAN PATENT SPECIFICATION

(11) **EP 3 802 090 B1**
(45) Date of publication and mention of the grant of the patent: **18.10.2023**
(21) Application number: 19727701.5
(22) Date of filing: 04.06.2019
(51) Int. Cl.: B29D 99/00, B29C 33/26, B29C 33/30, B29C 70/34, B29L 31/08

(54) **A SYSTEM AND METHOD FOR MANUFACTURING A WIND TURBINE BLADE**
SYSTEM UND VERFAHREN ZUR HERSTELLUNG EINER WINDTURBINENSCHAUFEL
SYSTÈME ET PROCÉDÉ DE FABRICATION D'UNE PALE D'ÉOLIENNE

(30) Priority: 07.06.2018 EP 18176529
(43) Date of publication of application: 14.04.2021
(73) Proprietor: LM Wind Power A/S, 6000 Kolding (DK)
(72) Inventor: DE L.M.ARIAS, Maria, 6000 Kolding (DK); KAAB MOSEGAARD, Ivan, 6000 Kolding (DK)
(74) Representative: COPA Copenhagen Patents
(86) International application number: PCT/EP2019/064536
(87) International publication number: WO 2019/234050

(56) References cited:
- EP-A1- 3 025 836
- CN-U- 203 752 382
- CN-U- 203 765 847

## Description

### Field of the invention

The present invention relates to a manufacturing system for the manufacture of a wind turbine blade and to methods of manufacturing a wind turbine blade using the manufacturing system of the present invention.

### Background of the invention

Wind turbine blades are typically manufactured using first and second blade shells, moulded in a pair of adjacent blade moulds. First, a blade gel coat or primer is typically applied to the blade mould. Subsequently, fibre reinforcement and/or fabrics are placed into the mould followed by resin infusion. A vacuum is typically used to draw epoxy resin material into a mould. Alternatively, prepreg technology can be used, in which a fibre or fabric pre-impregnated with resin forms a homogenous material which can be introduced into the mould.

Once the blade shells have sufficiently cured, the vacuum bags are removed and further operations can be performed on the hardened shells. For example, blade laminates and/or webs can be installed in the blade shells, various repair or patching operations may be carried out on the shells such as grinding of shell surfaces.

The shell halves are assembled by being glued or bolted together substantially along a chord plane of the blade. To this end, an adhesive glue is applied to the edges of the shells while in the moulds. The blade moulds are linked via a hinged turning mechanism, and a first of the blade moulds, containing a first of the blade shells, is accordingly turned relative to the second mould and shell, such that the first shell is positioned above the second shell. This allows for the blade shells to be closed together along the edge of the shells, to form a complete wind turbine blade having an upwind and a downwind side. To allow for secure bonding of the shells together, a suitable pressure is maintained along the exterior surfaces of the blade shells by the blade moulds, usually for approximately 3-4 hours.

High-quality blade moulds are one of the most expensive pieces of equipment in the blade manufacturing process, requiring extensive tooling and manufacture before use to ensure accurate reproduction of desired blade profiles, as well as to allow for the turning of the moulds to bond blade shell parts together. In addition, even a minor difference in blade characteristics such as length, camber, etc. will in general require a completely new blade mould for the manufacturing process.

Blade moulds may cost approximately €1-3 million in manufacturing and, dependent on where the moulds are made, extensive transportation time may be a factor before a new mould can be used at a manufacturing plant. This introduces considerable expense and lead time in the implementation of a manufacturing process for a new wind turbine blade. Accordingly, one of the limitations to efficient implementation of wind turbine technology is the time required for the initial setup of a blade manufacturing system. A further limitation is the time taken for the manufacturing of individual blades within such a system. A particular challenge lies in the cost-effective and time-efficient manufacturing of wind turbine blades having different shapes and sizes.

CN203752382U discloses a device for exchanging and installing two-blade-profile moulds, comprising a mould main body and a tail part mould. A convex block arranged on the mould main body and a concave block arranged on the tail part mould are connected in a matched mode and form a positioning system. A lower locking sheet arranged on the mould main body and an upper locking sheet arranged on the tail part mould are connected and fastened to form a locking device.

EP3025836A1 discloses a turning device for turning a first mould part relative to a second mould part for manufacturing a wind turbine blade part, the turning device comprising a base part, a rotational part, and first and second linear actuators. The linear actuators, engage the rotational or turning part at different distances from the rotation axis of the turning device.

CN203765847U relates to an automatic overturning system comprising a mold fixing part, an overturning arm, a coupling mechanism and a mold rotating part, wherein the overturning arm is fixed on the mold fixing part by a bolt.

DE19833869 C1 discloses a modular mould having different sections for a root part, a mainboard section and a tip section, wherein the root section may have differing lengths dimensions for accommodating for connections to different rotor hubs. However, this approach is unsatisfactory since changing the different modules and their related junctions to other parts, such as turning mechanisms or installations on the ground surface, is time-consuming, inefficient and expensive.

It is therefore a first object of the invention to provide a system and a method for manufacturing a wind turbine blade which overcomes these limitations.

In particular, it is an object of the present invention to enable a flexible and effective manufacturing operation, which saves time and costs, and which enables the production of wind turbine blades of different shapes or sizes.

### Summary of the invention

Accordingly, in a first aspect, the present invention relates to a manufacturing system for the manufacture of a wind turbine blade, the system comprising:
a first frame body comprising a lower frame part and an upper frame part, the upper frame part being detachably fastened on top of at least part of the lower frame part of the first frame body,
a first mould body supported by the first frame body, the first mould body comprising a first moulding surface defining an outer part of a first wind turbine blade shell part, the first mould body comprising a main mould part and a releasable tip mould part, wherein the releasable tip mould part is supported by the upper frame part of the first frame body, and
one or more turning devices for turning the first frame body, wherein the one or more turning devices are fastened to the lower frame part of the first frame body.

The present inventors have found that such manufacturing system allows for an efficient production of wind turbine blades of different sizes in that the upper frame part and its supported tip mould part can be rapidly be exchanged with an upper frame part and tip mould part having a different size. Since the upper frame part is detachably fastened on top of at least part of the lower frame part, the latter can remain fastened to one or more turning devices during the entire manufacturing process of blades of different sizes.

The manufacturing system further comprises
a second frame body comprising a lower frame part and an upper frame part, the upper frame part being detachably fastened on top of at least part of the lower frame part of the second frame body,
a second mould body supported by the second frame body, the second mould body comprising a second moulding surface defining an outer part of a second wind turbine blade shell part, the second mould body comprising a main mould part and a releasable tip mould part, wherein the releasable tip mould part is supported by the upper frame part of the second frame body, and
wherein the one or more turning devices are arranged for turning the first frame body relative to the second frame body.

As the upper frame part of the second frame body is detachably fastened on top of at least part of the lower frame part of the second frame body, the lower frame part may remain permanently fixed to a ground surface, while still being able to manufacture blades of different sizes.

Thus, the manufacturing system of the present invention is preferably suitable for manufacturing a pressure side shell part and a suction side shell part, which can be bonded to each other to produce a wind turbine blade shell. In addition to the above-described parts, the manufacturing system may further comprise at least one, preferably two additional mould bodies for fibre lay-up, resin infusion and curing, as well as transfer means for transferring a cured shell part or a preform thereof to the first and second mould bodies as described above. To that end, the system may further comprise a lifting device operable to demould or remove cured shell parts from said additional mould bodies. Preferably, said lifting device is further operable to transfer such shell parts to the first and second mould bodies for further processing.

The system may further advantageously comprise one or more fibre lay-up devices as well as means for infusing resin to a laid-up fibre stack. Thus, the first and second mould bodies may together form a blade moulding station. Preferably, said first and second blade moulds are used in a lay-up process of a fibrous composite material to produce first and second cured blade elements. Preferably, the manufacturing system further comprises an infusion mechanism operable to infuse said fibrous composite material with a resin to cure said fibrous composite material to form first and second cured blade parts. The turning devices may be operable to move the first frame body relative to the second frame body, to close first and second blade shell parts received in the mould bodies to form a closed wind turbine blade shell.

In some embodiments, the first mould body is arranged to receive a cured blade part of a pressure side shell of a wind turbine blade, while the second mould body is arranged to receive a cured blade part of a suction side shell of a wind turbine blade.

The frame body will usually comprise several support members such as a framework of interconnected bars or rods. It is preferred that the frame body is a substantially open-frame structure. In some embodiments, the support frame comprises one or more stationary support members and one or more movable support members, which are fastened and/or hinged to at least one stationary support member.

In a preferred embodiment, the first frame body is hingedly coupled to the second frame body. This allows for closing the blade shells after completion of curing and optional post-moulding operations, without a need for moving the blade shells. In some embodiments, a cured blade part may be manufactured in the mould body, comprising the steps of laying up a fibre material in a mould, infusing said fibre material with a resin, and substantially curing said resin in said fibre material to form a cured blade part.

It is preferred that the lower frame part extends at least over the entire length of its supported mould body. In some embodiments, the lower frame part has a stepped height profile. Thus, the lower frame part may have a first height along a first section and a second, lower height along a second section of its length, wherein the upper frame part is detachably fastened on top of at least part of said second section of the lower frame part. The upper frame part may also be detachably fastened to the first section of the lower frame part, however, typically not on top of the lower frame part but adjacent to the same.

In some embodiments, the length of the upper frame part corresponds to the length of the second section of the lower frame part. In other embodiments, the length of the upper frame part is less than the length of the second section of the lower frame part. In other embodiments, the length of the upper frame part is greater than the length of the second section of the lower frame part. The height of the first section of the lower frame part may be between 1 and 4 meters, such as between 1 and 3 meters. The height of the second section of the lower frame part may be between 0.5 and 2.5 meters, such as between 1 and 2 meters. The length of the first section of the lower frame part may be between 30 and 120 meters, such as between 30 and 100 meters, or between 40 and 80 meters. The length of the second section of the lower frame part may be between 2 and 40 meters, such as between 2 and 30 meters, between 2 and 20 meters, or between 5 and 15 meters. Thus, the upper frame part is preferably only partially located on top of the lower part, namely on top of said second section.

The upper frame part is detachably fastened on top of at least part of the lower frame part, preferably by using one or more fastening means, preferably using one or more bolts and nuts. The position of one or more fastening means on the lower frame part may be variable in the length direction of the lower frame part. Similarly, the position of one or more fastening means on the lower frame part may be variable in the width direction of the lower frame part. This allows the positioning and fastening of upper frame parts of different shapes and/or sizes.

The upper frame part may have a height which increases, preferably gradually increases, toward the tip end of the frame body or of the upper frame part. Thus, the height of the upper frame part may gradually increase over its length such that the maximum height is present at the tip end of the frame body or of the upper frame part. In a preferred embodiment, the upper frame part is at least 5% higher, such as at least 10% higher or at least 25% higher, at its tip end than at its opposed end which is closer to the root end of the frame body. This has been found to be particularly advantageous for curved and bent wind turbine blades, such as pre-bent blades, wherein the body of the blade is designed having a bend or curve, preferably in the direction of the pressure side of the blade. Increasing the height of the upper frame part allows for accommodating mould bodies for such blades that project upward towards the blade tip. At its tip end, the height of the upper frame part may be between 1 and 4 meters, such as between 2 and 4 meters, whereas at its opposing end that is closer to the root end for the frame body, the height of the upper frame part may be between 0.5 and 2.5 meters, such as between 1 and 2 meters.

Preferably, the frame bodies are configured such that the first and second frame bodies are positioned adjacent each other. The mould body is preferably supported by its respective frame body using one or more hinge beams of the frame body for receiving the mould body.

The moulding surface of each mould body will typically comprise an aerodynamic profile substantially corresponding to respective upwind (or pressure side) and downwind (or suction side) halves of a wind turbine blade. It is preferred that the main mould part of each mould body is fastened, preferably permanently fastened, to its respective frame body, preferably to the respective lower frame part. The main mould part will typically constitute at least 50% of the total length of the wind turbine blade, such as at least 60% or at least 70%. In one embodiment, the main mould part comprises a root part of a shell for attachment to a rotor hub of a wind turbine.

The tip mould part may be detachably fastened to the upper frame part of the respective frame body. The tip mould part may also be detachably fastened to the main mould part. Typically, the tip mould part is aligned with the main mould part to form a continuous moulding surface. The tip mould part will typically constitute less than 40%, such as less than 30% or less than 20% of the total length of the wind turbine blade part. In one embodiment, the manufacturing system comprises at least two releasable tip mould parts having different lengths, such as at least three or at least four tip mould parts having different lengths. In other embodiments, the manufacturing system comprises at least two releasable tip mould parts having different shapes, such as at least three or at least four tip mould parts having different shapes.

Preferably, the manufacturing system comprises two or more turning devices for turning the first frame body, preferably between 2 and 10, more preferably between 4 and 8 turning devices, which are fastened to the lower frame part of the first frame body. Advantageously, each turning device is fastened to the lower frame part of the first frame body with a hinge arm of the respective turning device.

The manufacturing system of the present invention will typically comprise a computer control system for controlling one or more steps of a blade manufacturing process, such as a turning or closing operation.

It is preferred that the upper frame part is shorter than the lower frame part. In some embodiments, the upper frame part has a length of between 2-40% of the length of the lower frame part of the respective frame body, such as between 2-30%, 2-25%, 5-25% or 10-25% of the length of the lower frame part of the respective frame body. The upper frame part may have a substantially rectangular cross section. Also, the lower frame part may have a substantially rectangular cross section.

In a preferred embodiment, the upper frame part has a length of between 2-40 meters, such as between 2 and 30 meters, or between 2 and 15 meters, or between 2 and 10 meters. The lower frame part may have a length of 40-120 meters, such as between 40 and 100 meters, or between 50 and 80 meters.

In a preferred embodiment, the first and/or the second frame body each comprise at least two, such as at least three, at least four, or at least five, interchangeable upper frame parts having different lengths. Thus, the manufacturing system may comprise a modular set of one lower frame part and several upper frame parts having different lengths or shapes, the upper frame parts being optionally connected with respective tip mould parts having different lengths, sizes and/or shapes, to enable the manufacturing of several wind turbine blade parts of different shapes and/or sizes. In other embodiments, the first and/or the second frame body each comprise at least two, such as at least three, at least four, or at least five, interchangeable upper frame parts, each upper frame part supporting a respective tip mould part, wherein the tip mould parts have different lengths, sizes and/or shapes. In other embodiments, the manufacturing system may comprise a main mould part and two or more tip mould parts of different lengths, sizes and/or shapes. Thus, the manufacturing system may be suitable for manufacturing wind turbine blade parts, such as wind turbine blade shells, having at least two different lengths.

In another embodiment, the first and/or the second mould body each comprise at least two interchangeable tip mould parts having different lengths and or shapes. In a preferred embodiment, each lower frame part extends at least over the entire length of its respective mould body.

The lower frame part of the second frame body is fastened to a ground surface, such as bolted to a ground surface. The present invention enables such fastening, such as permanent fastening, to the ground surface, since only part of frame body, i.e. the upper frame part has to be replaced when manufacturing a blade shell of a different size or shape.

In another embodiment, each main mould part is supported by its respective lower frame part. The main mould part may extend over part of or the entire length of a first section of the lower frame part having a first height h1, wherein the lower frame part comprises a second section having a second, lower height h2, for receiving the upper frame part. It is preferred that each frame body forms an open-framed structure such as an open-framed lattice or truss structure.

In another embodiment, each frame body comprises height adjustment elements, length adjustment elements, and/or width adjustment elements enabling the detachable fastening of upper frame parts of different sizes and/or shapes on top of at least part of the respective lower frame part of the frame body. Each frame body comprises fastening elements for detachably fastening the upper frame part to the respective lower frame part. Such fastening elements will typically comprise bolts and/or nuts.

In another aspect, the present invention relates to a method of manufacturing a wind turbine blade using the manufacturing system of the present invention, the method comprising the steps of:
arranging one or more layers of fibre material on the first and second moulding surfaces,
injecting the one or more layers of fibre material with a curable resin,
curing the resin to form to form respective first and second blade shell parts,
closing the first and second blade shell parts to form a closed wind turbine blade shell using the one or more turning devices for turning the first frame body relative to the second frame body, and
bonding said first and second blade shell parts to form a wind turbine blade.

The step of arranging one or more layers of fibre material on the first and second moulding surfaces may include a manual lay-up operation, or an automatic lay-up operation, e.g. spray lay-up, tape lay-up, fibre pultrusion, automotive lay-up of plies, or combinations thereof.

Relating to the step of bonding, preferably, the method further comprises the step of performing at least one intra-bonding operation on at least one of said blade shell parts in at least one of said first and second frame bodies, during the step of bonding said first blade shell with said second blade shell part to form a wind turbine blade. Preferably, said at least one intra-bonding operation is selected from one or more of the following: a blade shell repair operation, a surface grinding operation, a coating operation, a blade root flange finishing operation.

Relating to the step of curing, preferably the method further comprises the step of performing at least one intra-curing operation on at least one of said blade shell parts in at least one of said mould bodies, during the step of curing said blade shell part. Preferably, said at least one intra-curing operation is selected from one or more of the following: a grinding operation, a blade shell repair operation.

In another aspect, the present invention relates to a method of manufacturing a wind turbine blade using the manufacturing system of the present invention, the method comprising the steps of:
forming a cured first blade shell part and transferring the first blade shell part to the first mould body,
forming a cured second blade shell part and transferring the second blade shell part to the second mould body,
performing at least one post-moulding operation on the first and/or second blade shell part,
closing the first and second blade shell parts to form a closed wind turbine blade shell using the one or more turning devices for turning the first frame body relative to the second frame body and,
bonding said first and second blade shell parts to form a wind turbine blade.

Such post-moulding operation may involve a blade shell repair operation, a blade shell grinding operation, a blade root flange coupling operation, a blade web installation operation, a gluing operation, a coating operation, an assembly operation to assemble at least two separate sections of a wind turbine blade shell to form a single wind turbine blade shell, an overlamination operation, installation of blade sensor systems, installation of blade lightning protection systems, a geometry check operation, a geometry adjustment operation to push or pull portions of the blade shell into position, a secondary curing operation in for example an oven, additions of external components, e.g. aero devices, fans, spoilers, stall fences, or any other suitable manufacturing or assembly operations, or any suitable non-destructive testing activity, e.g. wrinkle measurements, ultrasonic thickness measurement, phased array testing of glue bonds, or combinations thereof.

In some embodiments, a post-moulding operation comprises applying an adhesive at a leading edge and a trailing edge of at least one of said first and second blade shell parts, wherein said step of bonding comprises arranging said first and second blade shell parts to adhere the leading edge of the first blade shell part to the leading edge of the second blade shell part, and to adhere the trailing edge of the first blade shell part to the trailing edge of the second blade shell part.

It will be understood that the invention is not limited to a direct connection between the respective leading and trailing edges of the shell parts, e.g. a tail piece or insert may be positioned between the leading edges and/or trailing edges of the shell parts. The fibre material used in the methods of the present invention will usually comprise glass fibres or carbon fibres, or mixtures thereof.

In another aspect, the present invention relates to a method of manufacturing at least two wind turbine blades having different sizes, using the manufacturing system of the present invention, the method comprising the steps of
manufacturing a first wind turbine blade, comprising
   providing respective upper frame parts and releasable tip mould parts for forming respective first and second moulding surfaces having a first size,
   forming respective first and second blade shell parts on the respective first and second moulding surfaces having the first size, or transferring respective first and second blade shell parts to the respective first and second moulding surfaces having the first size,
   closing the first and second blade shell parts to form a closed wind turbine blade shell using the one or more turning devices for turning the first frame body relative to the second frame body, and bonding said first and second blade shell parts to form the first wind turbine blade,
manufacturing a second wind turbine blade having a second size, comprising
   providing respective upper frame parts and releasable tip mould parts for forming respective first and second moulding surfaces having a second size,
   forming respective first and second blade shell parts on the respective first and second moulding surfaces having the second size, or transferring respective first and second blade shell parts to the respective first and second moulding surfaces having the second size,
   closing the first and second blade shell parts to form a closed wind turbine blade shell using the one or more turning devices for turning the first frame body relative to the second frame body, and bonding said first and second blade shell parts to form the second wind turbine blade.

Typically, said method comprises manufacturing at least two wind turbine blades having different lengths, resulting in blades of a first length and blades of second, shorter length. Thus, when manufacturing a wind turbine blade of a first length, the first and second moulding surfaces may have a first length, and when manufacturing a wind turbine blade of a second, shorter length, the first and second moulding surfaces may have a second, shorter length. This can be achieved efficiently by exchanging only the upper frame part together with its respective tip mould part, while the other parts remain in their previous configuration.

In a preferred embodiment, the lower frame part of the second frame body remains fastened to a ground surface while carrying out said steps. Typically, the one or more turning devices will remain fastened to the lower frame part of the first frame body while carrying out said steps. Thus, only minimal modifications have to be made to the system leading to a quicker and cheaper way of producing blades of different sizes and shapes.

The afore-described methods may further comprise a step of aligning the first blade shell part with the second blade shell part such that a leading edge and a trailing edge of the first blade shell part are in register with a respective leading edge and a respective trailing edge of the second blade shell part during the bonding step. Preferably, said step of aligning comprises translationally moving at least one of said first and second frame bodies, preferably, relative to the other of said first and second frame bodies, to align the first and second blade shell parts contained within said first and second frame bodies. The frame bodies are preferably positioned such that initially the leading edge side of said first blade shell part is provided adjacent the leading edge side of said second blade shell part. The step of moving (preferably hinging) is performed such that the trailing edge side of said first blade shell part is brought into contact with the trailing edge side of said second blade shell part.

The features described above with reference to the method may likewise apply to the manufacturing system of the present invention, and vice versa.

### Detailed description of the invention

Certain embodiments of the invention will now be described, by way of example only, with reference to the accompanying drawings, in which:
Fig. 1 shows a wind turbine;
Fig. 2 shows a schematic view of a wind turbine blade;
Fig. 3 shows a schematic view of an airfoil profile of the blade of Fig. 2;
Fig. 4 is a perspective view of a manufacturing system according to the present invention
Fig. 5 is a schematic cross-sectional view along the line A-A' in Fig. 4,
Fig. 6 is a partial top view of a frame body according to the present invention,
Fig. 7 is a partial side view of a frame body according to the present invention, and
Fig. 8 is a schematic perspective view of a manufacturing system according to the present invention.

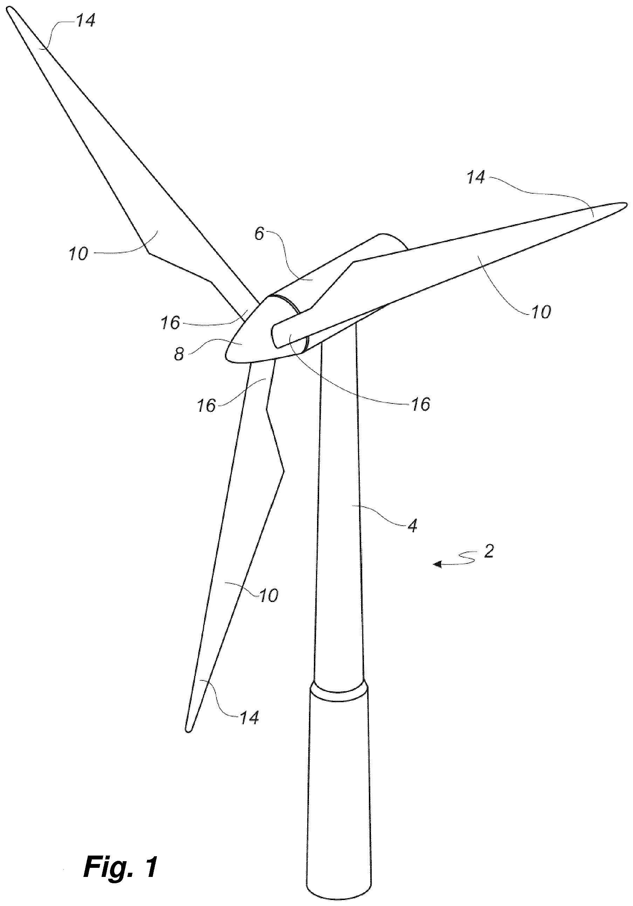

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R. While a three-bladed upwind wind turbine design is presented here, it will be understood that the invention may equally apply to blades of other wind turbine designs, e.g. two-bladed, downwind, etc.

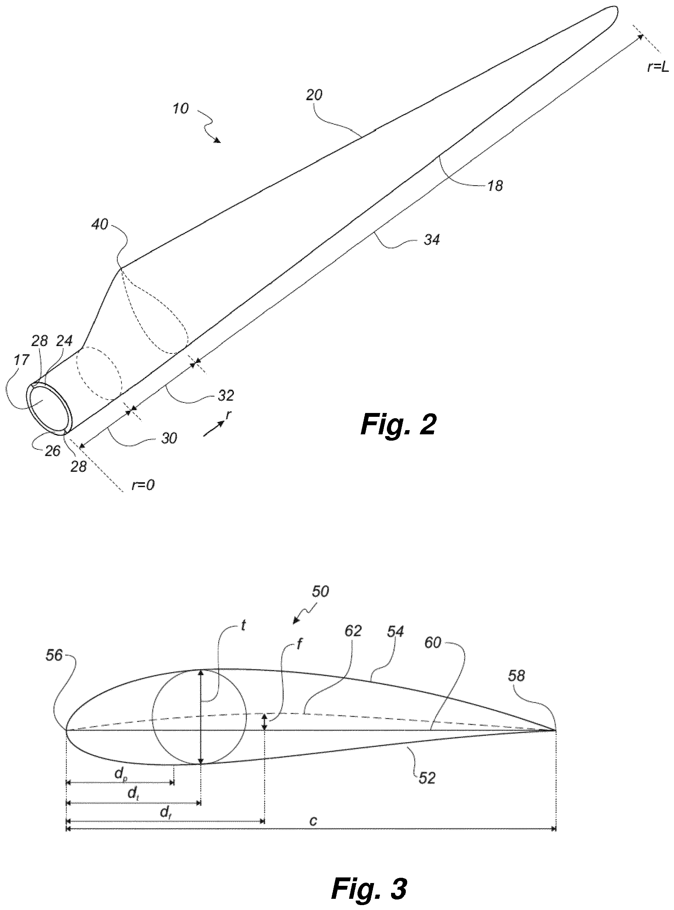

Fig. 2 shows a schematic view of a first embodiment of a wind turbine blade 10 according to the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber and lower camber, which are defined as the distances from the chord 60 and the suction side 54 and pressure side 52, respectively.

Airfoil profiles are often characterised by the following parameters: the chord length c, the maximum camber f, the position df of the maximum camber f, the maximum airfoil thickness t, which is the largest diameter of the inscribed circles along the median camber line 62, the position dt of the maximum thickness t, and a nose radius (not shown). These parameters are typically defined as ratios to the chord length c.

The wind turbine blades may further comprise pre-bent blades, wherein the body of the blade is designed having a bend or curve, preferably in the direction of the pressure side of the blade. Pre-bent blades are designed to flex during operation of the wind turbine, such that the blades straighten under the effect of optimum wind speed at the wind turbine. Such a pre-bent blade will provide improved performance during wind turbine operation, resulting in numerous advantages, e.g. tower clearance, swept area, blade weight, etc.

One way of constructing a wind turbine blade 10 comprises forming the blade 10 as two separate shell pieces - a first piece which substantially forms the pressure or upwind side 52 of the blade 10, and a second piece which substantially forms the suction or downwind side 54 of the blade 10. Such shell pieces are normally formed in separate open blade moulds conforming to the aerodynamic shapes of the respective sides, and are subsequently joined together by closing the blade moulds to form a wind turbine blade 10.

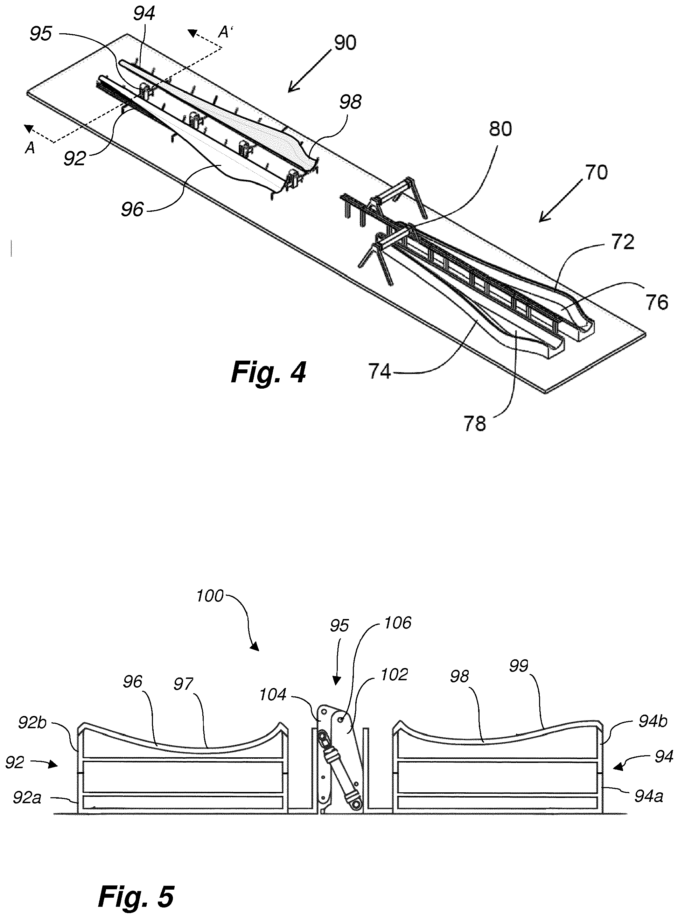

An embodiment of a manufacturing system for the manufacture of a wind turbine blade according to the invention is illustrated in Fig. 4. The illustrated system comprises a conventional moulding station 70 and a manufacturing system 90 of the present invention. The blade moulding station 70 comprises a set of first and second blade shell moulds 72, 74.

The blade moulds 72, 74 comprise respective first and second internal surfaces 76, 78 which are arranged to produce first and second cured blade shell parts having an aerodynamic profile substantially corresponding to respective upwind (or pressure side) and downwind (or suction side) halves of a wind turbine blade.

A lay-up operation is performed at the blade moulding station 70, wherein a plurality of layers of a preferably fibre-based composite material are applied to the internal surfaces 76, 78 of the blade moulds 72, 74. The fibre layers are applied to conform to the mould shape, and may be arranged at various thicknesses or densities dependent on the structural requirements of the wind turbine blade to be manufactured.

In the embodiment shown in Fig. 5, the blade moulding station 70 is provided with an automatic fibre lay-up apparatus 80, which allows for machine-controlled lay-up of the layers of fibre-based material in the blade moulds 72, 74. The automatic fibre lay-up apparatus comprises at least one fibre applicator device suspended on a moveable gantry provided above the blade moulds 72, 74, the at least one fibre applicator device operable to move along the length of the blade moulds 72, 74 to apply fibre layers, e.g. fibre tape, to the internal surfaces 76, 78 of the blade moulds 72, 74.

However, it will be understood that the manufacturing system of the invention may be implemented using any suitable lay-up mechanism, e.g. hand lay-up. Furthermore, the lay-up operation may comprise the use of pultruded elements or pre-pregs of composite material within the blade moulds, either as an alternative to or in addition to the layers of fibre-based material.

Once sufficient layers of the fibre-based material have been applied to the surfaces of the moulds 72, 74, a curing operation is then performed to cure the fibre layers to a relatively hardened state. In one embodiment, this may comprise applying a cover or vacuum bag over the fibre layers to form a container, and subsequently applying a vacuum pressure to the interior of the container defined by the vacuum bag and the surface of the blade mould 72, 74.

A curing resin is then infused or injected into the interior of the container, the resin spreading throughout the fibre layers by the action of the vacuum pressure. The resin is then allowed to cure and accordingly harden and join the layers of fibre-based material into a cured blade element, preferably comprising a cavity for later integration of a reinforced section (not shown); the cured blade element having a structural profile corresponding to the shape of the surface of the blade moulds 72, 74.

The term "cured blade part" is used herein to refer to blade parts which have been substantially cured by the curing operation, preferably to a level where the blade parts can be handled without undergoing significant deformation of the shell structure. The duration of the curing operation performed will depend on the type of curing resin used in the manufacture of the blade shell parts, but may be of the order of 2-3 hours using standard resins. However, it will be understood that the blade parts themselves may continue to undergo a curing process within the body of the blade parts for several hours after the denoted curing operation.

Accordingly, once the blade parts have substantially cured, the associated cover or vacuum bag may be removed, and the cured blade parts can be demoulded from the blade moulds 72, 74. To demould the blade parts, any manufacturing equipment which may be provided above the blade moulds 72, 74, e.g. automatic fibre applicator device 80, may be removed, and a lifting apparatus (not shown) may be positioned above the blade parts contained in the blade moulds 72, 74. The lifting apparatus is operable to lift the cured blade parts out of the blade moulds 72, 74, and to transfer the cured blade parts to the manufacturing system 90, where reinforcing and optionally post-moulding operations may be performed.

It will be understood that the transferring operation may be performed using any suitable lifting apparatus for the transferral of a wind turbine blade elements, e.g. a vacuum lifting device, a crane, a manual lifting operation, etc.

The manufacturing system 90 comprises a first frame body 92 and a second frame body 94 each comprising a mould body 96, 98 supported by respective support frame bodies. Each cured blade part can be arranged in its mould body for forming a reinforced section on the cured blade part of each blade shell or for carrying out other post-moulding operations. Forming of the reinforced section will typically include the lay-up of additional fibre material on the cured blade element, preferably in cavity prepared therein, followed by vacuum-assisted resin infusion and curing.

The first and second frame bodies 92, 94 are arranged in a parallel longitudinal relationship, the first frame body 92 being coupled to the second frame body 94 via a plurality of hinging mechanisms 95. The first frame body 92 is arranged to be hinged relative to the second frame body 94, such that the first frame body 92 is positioned above the second frame body 94 to form a closed arrangement. The first frame body 92 may also be translationally movable relative to the second frame body 94 when in the closed position, to correct the alignment between the first and second frame bodies 92, 94. The first frame body 92 may be moveable along the horizontal and/or vertical axis with respect to the second frame body 94.

Examples of post-moulding operations which can be performed at the post-moulding station 90 on the blade shells can include, but are not limited to: a blade shell repair operation, involving a repair of any minor defects in a cured blade shell; a blade shell cutting or grinding operation, wherein a portion of a surface of the cured blade shell can be cut away or ground to present a relatively smooth profile; a blade root flange coupling operation, wherein a pair of blade root flanges which are provided on first and second blade shells are coupled together to form a single integral blade root flange; a gluing operation, wherein an adhesive is applied to a surface of a blade shell to bond components or blade shells together; a coating operation, wherein an external surface of a blade shell is coated with a coating layer, e.g. a gel coat or suitable erosion resistant material; a laminate installation operation, wherein a main laminate or other element of the interior of a wind turbine blade may be fixed to an internal surface of one of the blade shells for positioning in the interior of a wind turbine blade; an overlamination operation; installation of internal blade components, e.g. load or deflection monitoring sensors, lightning protection systems, etc.; a survey of blade shell geometry; a secondary curing operation in, for example, an oven; or any other suitable manufacturing or assembly operations.

While the embodiment shown in Figure 4 illustrates a manufacturing system with a separate moulding station and a manufacturing system according to the present invention, both the moulding and the post-moulding operations can be carried out in the mould bodies 96, 98 of the manufacturing system 90. Alternatively, the moulding station 70 could also comprise first and second frame bodies as discussed above for the manufacturing system of the present invention.

Fig. 5 shows a schematic cross-sectional view of one embodiment of a manufacturing system 100 according to the present invention. The manufacturing system 100 comprises a first frame body 92 and a second frame body 94. The first frame body 92 comprises a lower frame part 92a and an upper frame part 92b, which is detachably fastened to the lower frame part 92a. Likewise, the second frame body 94 comprises a lower frame part 94a and an upper frame part 94b, which is detachably fastened to the lower frame part 94a. The upper frame parts 92b and 94b each support a first mould body 96 and a second mould body 98, respectively. Each mould body 96, 98 comprises a moulding surface 97, 99 defining an outer part of respective wind turbine blade shell parts, i.e. a pressure side shell and a suction side shell.

Fibre-reinforcement material as well as possible core material may be arranged on the moulding surfaces of the mould bodies 96, 98, after which a curable resin may be infused into mould cavities formed by the mould bodies 96, 98 which is subsequently cured. Alternatively, the mould bodies 96, 98 of Fig. 5 may receive already cured shell parts for one or more post-moulding operations being carried out in the manufacturing system.

In a next step, the cured and optionally further treated wind turbine blade shell parts may be adhered to each other. This may be carried out by applying glue to the leading edge and trailing edge (and along a not shown glue flange), after which the first mould body 96 along with the first wind turbine blade shell part is turned over and aligned with the second mould body 98 and second wind turbine blade shell part, such that the two wind turbine blade shell parts are adhered to each other along the leading edge and trailing edge.

The two mould bodies 96, 98 are arranged in parallel to each other. To turn the first mould body 98 over, a plurality of turning devices 95 are arranged along the longitudinal direction of the two mould bodies 96, 98. The turning devices 95 each comprise a stationary base part 102 and a rotational part 104, which is rotationally movable relative to the base part 102 about a rotation axis 16. The base part 102 is attached or at least fixedly arranged with respect to the lower frame part 94a of the second frame body 94. The rotational part 104 is attached to the lower frame part 92a of the first frame body 92, such that the first frame body 92 may be turned relative to the second frame body 94. The base part 102 and the rotational part 104 are preferably detachably coupled to the second frame body 94 and the first frame body 92, respectively.

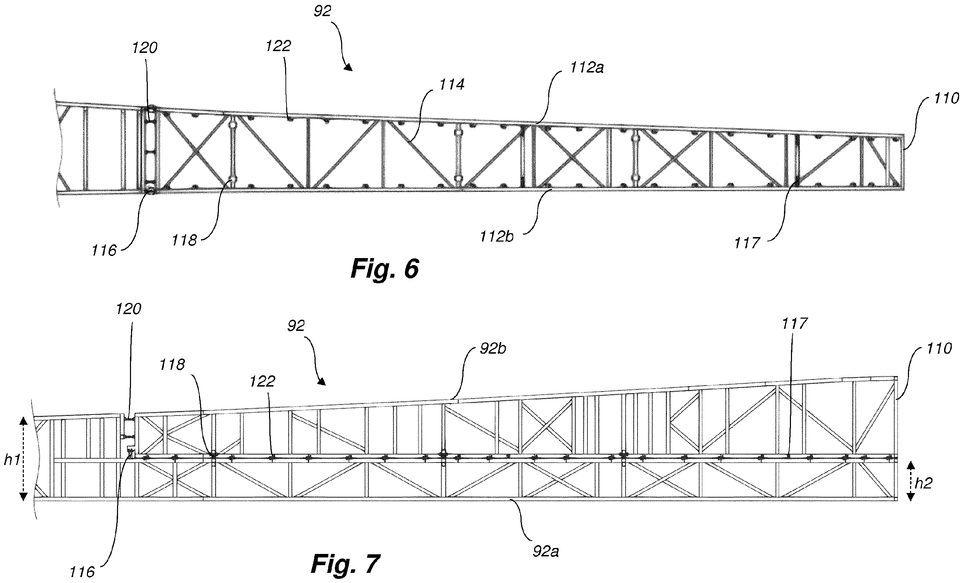

One embodiment of a frame body according to the present invention is illustrated in the partial top view of Fig. 6 and the partial side view of Fig. 7. As seen in Fig. 6, the frame body comprises a set of opposing side rails 112a, 112b extending longitudinally between a tip end 110 and an opposing root end (not shown due to cut-off). A plurality of support elements 114 of having different spatial orientations form an open-framed structure such as an open-framed lattice or truss structure.

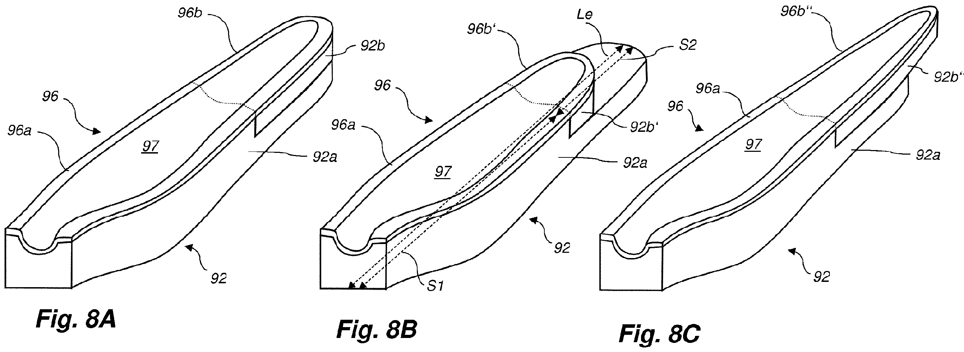

As seen in Fig. 7, an upper frame part 92b is detachably fastened to a lower frame part 92a. The frame body 92 also comprises height adjustment blocks 122, length adjustment elements 120, and width adjustment elements 117 for accommodating for different sizes of upper frame parts 92b. In addition, the frame body 92 comprises first fastening elements 116 and second fastening elements 118 for fixing the upper frame part 92b to the lower frame part 92a in the length and width direction, respectively. The lower frame part 92a illustrated in Fig. 7 has a stepped height profile with a first height h1 along a first section and a second, lower height h2 along a second section of its length. The upper frame part 92b is detachably fastened on top of said second section of the lower frame part 92a. The length Le of the lower frame part and the extent of the first section S1 and the second section S2 are illustrated with the dashed lines of Fig. 8B.

The schematic perspective view of Figs. 8A, 8B and 8C illustrates different parts of a manufacturing system according to the present invention for manufacturing blade shell parts of two alternative sizes. A frame body 92 comprises a lower frame part 92a and an upper frame part 92b, the upper frame part 92b being detachably fastened on top of part of the lower frame part 92a. The respective upper frame part 92b is different in the two embodiments shown in respective Figs. 8A and 8B, while the lower frame part 92 is the same. As described above, the frame parts 92a, 92b, will usually comprise several support elements such as bars or rods with different spatial orientation (not shown).

A mould body 96 is supported by the first frame body 92, the mould body 96 comprising a moulding surface 97 defining an outer part of a wind turbine blade shell part, such as a downwind shell half or an upwind shell half. The mould body 96 comprises a main mould part 96a and an exchangeable tip mould part 96b, wherein the exchangeable tip mould part 96b is supported by the upper frame part 92b. As seen in Fig. 8B, the tip mould part 96b' can be exchanged together with its supporting upper frame part 92b' in an easy and quick way if a blade shell of a different size and/or shape is to be produced.

Fig. 8C illustrates a third arrangement in which a longer tip mould part 96b" is provided together with its supporting upper frame part 92b" for providing a longer moulding surface. Thus, the embodiment of the manufacturing system in Fig. 8 enables the efficient manufacturing of blade shell parts of three different sizes.

The invention is not limited to the embodiment described herein, and may be modified or adapted without departing from the scope of the present invention.

## Claims

1. A manufacturing system (100) for the manufacture of a wind turbine blade, the system comprising:
a first frame body (92) comprising a lower frame part (92a) and an upper frame part (92b), the upper frame part (92b) being detachably fastened on top of at least part of the lower frame part (92a) of the first frame body (92),
a first mould body (96) supported by the first frame body (92), the first mould body comprising a first moulding surface (97) defining an outer part of a first wind turbine blade shell part, the first mould body comprising a main mould part (96a) and a releasable tip mould part (96b), wherein the releasable tip mould part is supported by the upper frame part (92b) of the first frame body (92), and
one or more turning devices (95) for turning the first frame body (92), wherein the one or more turning devices are fastened to the lower frame part (92a) of the first frame body (92), the system further comprising:
a second frame body (94) comprising a lower frame part (94a) and an upper frame part (94b), the upper frame part (94b) being detachably fastened on top of at least part of the lower frame part (94a) of the second frame body (94),
a second mould body (98) supported by the second frame body (94), the second mould body comprising a second moulding surface (99) defining an outer part of a second wind turbine blade shell part, the second mould body comprising a main mould part and a releasable tip mould part, wherein the releasable tip mould part is supported by the upper frame part (94b) of the second frame body (94), and
wherein the one or more turning devices are arranged for turning the first frame body (92) relative to the second frame body (94),
wherein the lower frame part (94a) of the second frame body (94) is fastened to a ground surface,
wherein each frame body comprises fastening elements for detachably fastening the upper frame part (92b) to the respective lower frame part (92a), and wherein the position of the fastening elements on the lower frame part (92a) is variable in the length direction and/or in the width direction of the lower frame part (92a).

2. A manufacturing system (100) according to claim 1, wherein the upper frame part (92b) has a length of between 2-35% of the length of the lower frame part (92a) of the respective frame body.

3. A manufacturing system (100) according to any of the preceding claims, wherein the upper frame part (92b) has a length of between 2-40 meters and wherein the lower frame part (92a) has a length of 40-120 meters.

4. A manufacturing system (100) according to any of the preceding claims, wherein the first and/or the second frame body (94) each comprise at least two interchangeable upper frame parts (92b, 92b') having different lengths.

5. A manufacturing system (100) according to any of the preceding claims, wherein the first and/or the second mould body each comprise at least two interchangeable tip mould parts having different lengths.

6. A manufacturing system (100) according to any of the preceding claims, wherein each lower frame part (92a) extends over the entire length of its respective mould body.

7. A manufacturing system (100) according to any of the preceding claims, wherein each main mould part is supported by its respective lower frame part (92a).

8. A manufacturing system (100) according to any of the preceding claims, wherein each frame body forms an open-framed structure such as an open-framed lattice or truss structure.

9. A method of manufacturing a wind turbine blade using the manufacturing system (100) of claims 1-8, the method comprising the steps of:
arranging one or more layers of fibre material on the first and second moulding surfaces,
injecting the one or more layers of fibre material with a curable resin,
curing the resin to form to form respective first and second blade shell parts,
closing the first and second blade shell parts to form a closed wind turbine blade shell using the one or more turning devices for turning the first frame body (92) relative to the second frame body (94), and
bonding said first and second blade shell parts to form a wind turbine blade.

10. A method of manufacturing a wind turbine blade using the manufacturing system (100) of claims 1-8, the method comprising the steps of:
forming a cured first blade shell part and transferring the first blade shell part to the first mould body,
forming a cured second blade shell part and transferring the second blade shell part to the second mould body,
performing at least one post-moulding operation on the first and/or second blade shell part,
closing the first and second blade shell parts to form a closed wind turbine blade shell using the one or more turning devices for turning the first frame body (92) relative to the second frame body (94) and,
bonding said first and second blade shell parts to form a wind turbine blade.

11. A method of manufacturing at least two wind turbine blades having different sizes, using the manufacturing system (100) of claims 1-8, the method comprising the steps of
manufacturing a first wind turbine blade, comprising
providing respective upper frame parts (92b) and releasable tip mould parts (96b) for forming respective first and second moulding surfaces having a first size,
forming respective first and second blade shell parts on the respective first and second moulding surfaces having the first size, or transferring respective first and second blade shell parts to the respective first and second moulding surfaces having the first size,
closing the first and second blade shell parts to form a closed wind turbine blade shell using the one or more turning devices for turning the first frame body (92) relative to the second frame body (94), and bonding said first and second blade shell parts to form the first wind turbine blade,
manufacturing a second wind turbine blade having a second size, comprising
providing respective upper frame parts (92b') and releasable tip mould parts (96b') for forming respective first and second moulding surfaces having a second size,
forming respective first and second blade shell parts on the respective first and second moulding surfaces having the second size, or transferring respective first and second blade shell parts to the respective first and second moulding surfaces having the second size,
closing the first and second blade shell parts to form a closed wind turbine blade shell using the one or more turning devices for turning the first frame body (92) relative to the second frame body (94), and bonding said first and second blade shell parts to form the second wind turbine blade.

12. A method according to any of claims 9-11, wherein the lower frame part (92a) of the second frame body (94) remains fastened to a ground surface while carrying out said steps.

## Patentansprüche

1. Herstellungssystem (100) für die Herstellung eines Windkraftanlagenflügels, wobei das System Folgendes umfasst:
einen ersten Rahmenkörper (92), umfassend einen unteren Rahmenteil (92a) und einen oberen Rahmenteil (92b), wobei der obere Rahmenteil (92b) abnehmbar auf mindestens einem Teil des unteren Rahmenteils (92a) des ersten Rahmenkörpers (92) befestigt ist,
einen ersten Formwerkzeugkörper (96), der von dem ersten Rahmenkörper (92) getragen wird, wobei der erste Formwerkzeugkörper eine erste Formungsfläche (97) umfasst, die einen äußeren Teil eines ersten Windkraftanlagenflügelschalenteils definiert, wobei der erste Formwerkzeugkörper einen Hauptformwerkzeugteil (96a) und einen lösbaren Spitzenformwerkzeugteil (96b) umfasst, wobei der lösbare Spitzenformwerkzeugteil von dem oberen Rahmenteil (92b) des ersten Rahmenkörpers (92) getragen wird, und
eine oder mehrere Wendevorrichtungen (95) zum Wenden des ersten Rahmenkörpers (92), wobei die eine oder die mehreren Wendevorrichtungen an dem unteren Rahmenteil (92a) des ersten Rahmenkörpers (92) befestigt sind, wobei das System ferner Folgendes umfasst:
einen zweiten Rahmenkörper (94), umfassend einen unteren Rahmenteil (94a) und einen oberen Rahmenteil (94b), wobei der obere Rahmenteil (94b) abnehmbar auf mindestens einem Teil des unteren Rahmenteils (94a) des zweiten Rahmenkörpers (94) befestigt ist,
einen zweiten Formwerkzeugkörper (98), der von dem zweiten Rahmenkörper (94) getragen wird, wobei der zweite Formwerkzeugkörper eine zweite Formungsfläche (99) umfasst, die einen äußeren Teil eines zweiten Windkraftanlagenflügelschalenteils definiert, wobei der zweite Formwerkzeugkörper einen Hauptformwerkzeugteil und einen lösbaren Spitzenformwerkzeugteil umfasst, wobei der lösbare Spitzenformwerkzeugteil von dem oberen Rahmenteil (94b) des zweiten Rahmenkörpers (94) getragen wird, und
wobei die eine oder die mehreren Wendevorrichtungen zum Wenden des ersten Rahmenkörpers (92) relativ zu dem zweiten Rahmenkörper (94) angeordnet sind, wobei der untere Rahmenteil (94a) des zweiten Rahmenkörpers (94) an einer Bodenoberfläche befestigt ist,
wobei die Rahmenkörper jeweils Befestigungselemente zum abnehmbaren Befestigen des oberen Rahmenteils (92b) an dem jeweiligen unteren Rahmenteil (92a) umfassen und wobei die Lage der Befestigungselemente an dem unteren Rahmenteil (92a) in der Längenrichtung und/oder in der Breitenrichtung des unteren Rahmenteils (92a) verstellbar ist.

2. Herstellungssystem (100) nach Anspruch 1, wobei der obere Rahmenteil (92b) eine Länge von zwischen 2-35 % der Länge des unteren Rahmenteils (92a) des jeweiligen Rahmenkörpers aufweist.

3. Herstellungssystem (100) nach einem der vorangehenden Ansprüche, wobei der obere Rahmenteil (92b) eine Länge von zwischen 2-40 Metern aufweist und wobei der untere Rahmenteil (92a) eine Länge von 40-120 Metern aufweist.

4. Herstellungssystem (100) nach einem der vorangehenden Ansprüche, wobei der erste und/oder der zweite Rahmenkörper (94) jeweils mindestens zwei untereinander austauschbare obere Rahmenteile (92b, 92b') umfassen, die unterschiedliche Längen aufweisen.

5. Herstellungssystem (100) nach einem der vorangehenden Ansprüche, wobei der erste und/oder der zweite Formwerkzeugkörper jeweils mindestens zwei untereinander austauschbare Spitzenformwerkzeugteile umfassen, die unterschiedliche Längen aufweisen.

6. Herstellungssystem (100) nach einem der vorangehenden Ansprüche, wobei sich die unteren Rahmenteile (92a) jeweils über die gesamte Länge ihres jeweiligen Formwerkzeugkörpers erstrecken.

7. Herstellungssystem (100) nach einem der vorangehenden Ansprüche, wobei die Hauptformwerkzeugteile jeweils von ihrem jeweiligen unteren Rahmenteil (92a) getragen werden.

8. Herstellungssystem (100) nach einem der vorangehenden Ansprüche, wobei die Rahmenkörper jeweils eine offenrahmige Struktur, wie etwa eine offenrahmige Gitter- oder Fachwerkstruktur bilden.

9. Verfahren zum Herstellen eines Windkraftanlagenflügels unter Verwendung des Herstellungssystems (100) nach Ansprüchen 1-8, wobei das Verfahren folgende Schritte umfasst:
Anordnen einer oder mehrerer Schichten aus Fasermaterial auf der ersten und der zweiten Formungsfläche,
Einspritzen eines härtbaren Harzes in die eine oder die mehreren Schichten aus Fasermaterial,
Aushärten des Harzes, um einen ersten und einen zweiten Flügelschalenteil zu bilden,
Schließen des ersten und des zweiten Flügelschalenteils unter Verwendung der einen oder der mehreren Wendevorrichtungen zum Wenden des ersten Rahmenkörpers (92) relativ zu dem zweiten Rahmenkörper (94), um eine geschlossene Windkraftanlagenflügelschale zu bilden, und
Verkleben des ersten und des zweiten Flügelschalenteils, um einen Windkraftanlagenflügel zu bilden.

10. Verfahren zum Herstellen eines Windkraftanlagenflügels unter Verwendung des Herstellungssystems (100) nach Ansprüchen 1-8, wobei das Verfahren folgende Schritte umfasst:
Bilden eines ausgehärteten ersten Flügelschalenteils und Umlagern des ersten Flügelschalenteils in den ersten Formwerkzeugkörper,
Bilden eines ausgehärteten zweiten Flügelschalenteils und Umlagern des zweiten Flügelschalenteils in den zweiten Formwerkzeugkörper,
Ausführen mindestens eines Nachbearbeitungsvorgangs an dem ersten und/oder dem zweiten Flügelschalenteil,
Schließen des ersten und des zweiten Flügelschalenteils unter Verwendung der einen oder der mehreren Wendevorrichtungen zum Wenden des ersten Rahmenkörpers (92) relativ zu dem zweiten Rahmenkörper (94), um eine geschlossene Windkraftanlagenflügelschale zu bilden, und
Verkleben des ersten und des zweiten Flügelschalenteils, um einen Windkraftanlagenflügel zu bilden.

11. Verfahren zum Herstellen von mindestens zwei Windkraftanlagenflügeln mit unterschiedlichen Größen unter Verwendung des Herstellungssystems (100) nach Ansprüchen 1-8, wobei das Verfahren die Schritte des Herstellens eines ersten Windkraftanlagenflügels umfasst, umfassend:
Bereitstellen jeweiliger oberer Rahmenteile (92b) und lösbarer Spitzenformwerkzeugteile (96b) zum Bilden einer ersten bzw. einer zweiten Formungsfläche mit einer ersten Größe,
Bilden eines ersten und eines zweiten Flügelschalenteils auf der ersten bzw. der zweiten Formungsfläche mit der ersten Größe oder Umlagern des ersten und des zweiten Flügelschalenteils auf die erste bzw. die zweite Formungsfläche mit der ersten Größe,
Schließen des ersten und des zweiten Flügelschalenteils unter Verwendung der einen oder der mehreren Wendevorrichtungen zum Wenden des ersten Rahmenkörpers (92) relativ zu dem zweiten Rahmenkörper (94), um eine geschlossene Windkraftanlagenflügelschale zu bilden, und Verkleben des ersten und des zweiten Flügelschalenteils, um den ersten Windkraftanlagenflügel zu bilden,
Herstellen eines zweiten Windkraftanlagenflügels mit einer zweiten Größe, umfassend
Bereitstellen jeweiliger oberer Rahmenteile (92b') und lösbarer Spitzenformwerkzeugteile (96b') zum Bilden einer ersten bzw. einer zweiten Formungsfläche mit einer zweiten Größe,
Bilden eines ersten und eines zweiten Flügelschalenteils auf der ersten bzw. der zweiten Formungsfläche mit der zweiten Größe oder Umlagern des ersten und zweiten Flügelschalenteils auf die erste bzw. die zweite Formungsfläche mit der zweiten Größe,
Schließen des ersten und des zweiten Flügelschalenteils unter Verwendung der einen oder der mehreren Wendevorrichtungen zum Wenden des ersten Rahmenkörpers (92) relativ zu dem zweiten Rahmenkörper (94), um eine geschlossene Windkraftanlagenflügelschale zu bilden, und Verkleben des ersten und des zweiten Flügelschalenteils, um den zweiten Windkraftanlagenflügel zu bilden.

12. Verfahren nach einem der Ansprüche 9-11, wobei der untere Rahmenteil (92a) des zweiten Rahmenkörpers (94) während des Ausführens der Schritte an einer Bodenoberfläche befestigt bleibt.

## Revendications

1. Système de fabrication (100) pour la fabrication d'une pale d'éolienne, le système comportant :
un premier corps de cadre (92) comportant une partie formant cadre inférieur (92a) et une partie formant cadre supérieur (92b), la partie formant cadre supérieur (92b) étant fixée de manière détachable sur la partie supérieure d'au moins une partie de la partie formant cadre inférieur (92a) du premier corps de cadre (92),
un premier corps de moule (96) supporté par le premier corps de cadre (92), le premier corps de moule comportant une première surface de moulage (97) définissant une partie extérieure d'une première partie formant coque de pale d'éolienne, le premier corps de moule comportant une partie formant moule principal (96a) et une partie formant moule de bout libérable (96b), dans lequel la partie formant moule de bout libérable est supportée par la partie formant cadre supérieur (92b) du premier corps de cadre (92), et
un ou plusieurs dispositifs de rotation (95) qui servent à des fins de rotation du premier corps de cadre (92), dans lequel lesdits un ou plusieurs dispositifs de rotation sont fixés sur la partie formant cadre inférieur (92a) du premier corps de cadre (92), le système comportant par ailleurs :
un deuxième corps de cadre (94) comportant une partie formant cadre inférieur (94a) et une partie formant cadre supérieur (94b), la partie formant cadre supérieur (94b) étant fixée de manière détachable sur la partie supérieure d'au moins une partie de la partie formant cadre inférieur (94a) du deuxième corps de cadre (94),
un deuxième corps de moule (98) supporté par le deuxième corps de cadre (94), le deuxième corps de moule comportant une deuxième surface de moulage (99) définissant une partie extérieure d'une deuxième partie formant coque de pale d'éolienne, le deuxième corps de moule comportant une partie formant moule principal et une partie formant moule de bout libérable, dans lequel la partie formant moule de bout libérable est supportée par la partie formant cadre supérieur (94b) du deuxième corps de cadre (94), et
dans lequel lesdits un ou plusieurs dispositifs de rotation sont agencés à des fins de rotation du premier corps de cadre (92) par rapport au deuxième corps de cadre (94),
dans lequel la partie formant cadre inférieur (94a) du deuxième corps de cadre (94) est fixée sur une surface du sol,
dans lequel chaque corps de cadre comporte des éléments de fixation qui servent à fixer de manière détachable la partie formant cadre supérieur (92b) sur la partie formant cadre inférieur respective (92a), et dans lequel la position des éléments de fixation sur la partie formant cadre inférieur (92a) est variable dans la direction allant dans le sens de la longueur et/ou dans la direction allant dans le sens de la largeur de la partie formant cadre inférieur (92a).

2. Système de fabrication (100) selon la revendication 1, dans lequel la partie formant cadre supérieur (92b) a une longueur entre 2 à 35 % de la longueur de la partie formant cadre inférieur (92a) du corps de cadre respectif.

3. Système de fabrication (100) selon l'une quelconque des revendications précédentes, dans lequel la partie formant cadre supérieur (92b) a une longueur entre 2 à 40 mètres et dans lequel la partie formant cadre inférieur (92a) a une longueur de 40 à 120 mètres.

4. Système de fabrication (100) selon l'une quelconque des revendications précédentes, dans lequel le premier et/ou le deuxième corps de cadre (94) comportent chacun au moins deux parties formant cadre supérieur interchangeables (92b, 92b') ayant différentes longueurs.

5. Système de fabrication (100) selon l'une quelconque des revendications précédentes, dans lequel le premier et/ou le deuxième corps de moule comportent chacun au moins deux parties formant moule de bout interchangeables ayant différentes longueurs.

6. Système de fabrication (100) selon l'une quelconque des revendications précédentes, dans lequel chaque partie formant cadre inférieur (92a) s'étend sur toute la longueur de son corps de moule respectif.

7. Système de fabrication (100) selon l'une quelconque des revendications précédentes, dans lequel chaque partie formant moule principal est supportée par sa partie formant cadre inférieur respective (92a).

8. Système de fabrication (100) selon l'une quelconque des revendications précédentes, dans lequel chaque corps de cadre forme une structure à cadre ouvert telle qu'une structure de type poutrelle ou treillis à cadre ouvert.

9. Procédé de fabrication d'une pale d'éolienne au moyen du système de fabrication (100) selon les revendications 1 à 8, le procédé comportant les étapes consistant à :
agencer une ou plusieurs couches de matériau à base de fibres sur les première et deuxième surfaces de moulage,
injecter lesdites une ou plusieurs couches de matériau à base de fibres au moyen d'une résine durcissable,
faire durcir la résine pour former des première et deuxième parties formant coque de pale respectives,
fermer les première et deuxième parties formant coque de pale pour former une coque de pale d'éolienne fermée en utilisant lesdits un ou plusieurs dispositifs de rotation qui servent à des fins de rotation du premier corps de cadre (92) par rapport au deuxième corps de cadre (94), et
relier lesdites première et deuxième parties formant coque de pale pour former une pale d'éolienne.

10. Procédé de fabrication d'une pale d'éolienne au moyen du système de fabrication (100) selon les revendications 1 à 8, le procédé comportant les étapes consistant à :
former une première partie formant coque de pale durcie et transférer la première partie formant coque de pale sur le premier corps de moule,
former une deuxième partie formant coque de pale durcie et transférer la deuxième partie formant coque de pale sur le deuxième corps de moule,
effectuer au moins une opération de post-moulage sur les première et/ou deuxième parties formant coque de pale,
fermer les première et deuxième parties formant coque de pale pour former une coque de pale d'éolienne fermée en utilisant lesdits un ou plusieurs dispositifs de rotation qui servent à des fins de rotation du premier corps de cadre (92) par rapport au deuxième corps de cadre (94) et,
relier lesdites première et deuxième parties formant coque de pale pour former une pale d'éolienne.

11. Procédé de fabrication d'au moins deux pales d'éolienne ayant différentes tailles, au moyen du système de fabrication (100) selon les revendications 1 à 8, le procédé comportant les étapes consistant à :
fabriquer une première pale d'éolienne, comportant les étapes consistant à :
mettre en oeuvre des parties formant cadre supérieur respectives (92b) et des parties formant moule de bout libérables respectives (96b) pour former des première et deuxième surfaces de moulage respectives ayant une première taille,
former des première et deuxième parties formant coque de pale respectives sur les première et deuxième surfaces de moulage respectives ayant la première taille, ou transférer des première et deuxième parties formant coque de pale respectives sur les première et deuxième surfaces de moulage respectives ayant la première taille,
fermer les première et deuxième parties formant coque de pale pour former une coque de pale d'éolienne fermée en utilisant lesdits un ou plusieurs dispositifs de rotation qui servent à des fins de rotation du premier corps de cadre (92) par rapport au deuxième corps de cadre (94), et relier lesdites première et deuxième parties formant coque de pale pour former la première pale d'éolienne,
fabriquer une deuxième pale d'éolienne ayant une deuxième taille, comportant les étapes consistant à :
mettre en oeuvre des parties formant cadre supérieur respectives (92b') et des parties formant moule de bout libérables respectives (96b') pour former des première et deuxième surfaces de moulage respectives ayant une deuxième taille,
former des première et deuxième parties formant coque de pale respectives sur les première et deuxième surfaces de moulage respectives ayant la deuxième taille, ou transférer des première et deuxième parties formant coque de pale respectives sur les première et deuxième surfaces de moulage respectives ayant la deuxième taille,
fermer les première et deuxième parties formant coque de pale pour former une coque de pale d'éolienne fermée en utilisant lesdits un ou plusieurs dispositifs de rotation qui servent à des fins de rotation du premier corps de cadre (92) par rapport au deuxième corps de cadre (94), et relier lesdites première et deuxième parties formant coque de pale pour former la deuxième pale d'éolienne.

12. Procédé selon l'une quelconque des revendications 9 à 11, dans lequel la partie formant cadre inférieur (92a) du deuxième corps de cadre (94) reste fixée sur une surface du sol lors de la réalisation desdites étapes.
